# EUROPÄISCHE PATENTSCHRIFT

(11) **EP 1 097 033 B1**
(45) Veröffentlichungstag und Bekanntmachung des Hinweises auf die Patenterteilung: **22.09.2004**
(21) Anmeldenummer: 00922422.1
(22) Anmeldetag: 02.03.2000
(51) Int. Cl.: B29B 9/06, B29B 9/14, B29C 53/14

(54) **LANGFASERGRANULAT UND VERFAHREN UND VORRICHTUNG ZUR HERSTELLUNG EINES LANGFASERGRANULATS**
CONTINUOUS-STRAND PELLETS AND METHOD AND DEVICE FOR PREPARING CONTINUOUS-STRAND PELLETS
GRANULAT A LONGUES FIBRES ET PROCEDE ET DISPOSITIF DE FABRICATION DUDIT GRANULAT

(30) Priorität: 25.03.1999 DE 29905499 U
(43) Veröffentlichungstag der Anmeldung: 09.05.2001
(73) Patentinhaber: Ostthüringische Materialprüfgesellschaft für Textil und Kunststoffe mbH Rudolfstadt, 07407 Rudolstadt (DE)
(72) Erfinder: MIECK, Klaus-Peter, D-07407 Rudolstadt (DE); REUSSMANN, Thomas, D-07407 Rudolstadt (DE)
(74) Vertreter: Brandenburg, Thomas, Dr.
(86) Internationale Anmeldenummer: PCT/DE2000/000706
(87) Internationale Veröffentlichungsnummer: WO 2000/058064

(56) Entgegenhaltungen:
- EP-A- 0 703 065
- WO-A-85/01691
- DE-A- 19 711 247
- US-A- 5 356 581
- US-A- 5 435 709
- US-A- 5 725 954

## Beschreibung

Die Erfindung betrifft ein Langfasergranulat aus Granulatteilchen, bei denen in einer thermoplastischen Matrix Verstärkungsstapelfasern schraubenförmig angeordnet sind. Die Erfindung betrifft ferner ein Verfahren zur Herstellung von Langfasergranulat aus einer Stapelfasermischung aus thermoplastischen Fasern und Verstärkungsfasern, bei dem man ein Faserband aus der Stapelfasermischung durch eine Vorheizzone führt, dann durch eine Heizdüse zu einem Strang zieht und den Strang nach Drehung und Konsolidierung durch Kühlung zu dem Langfasergranulat ablängt. Die Erfindung betrifft schließlich eine Vorrichtung zur Herstellung von Langfasergranulat aus einem Stapelfaserband aus thermoplastischen Fasern und Verstärkungsfasern mit einer Vorheizzone, einer Heizdüse, einer Kühlzone , einem Drehorgan und einem Granulator.

Kurzfaserhaltige Granulate werden durch die Compoundierung von Verstärkungsfasern und dem jeweiligen Matrixmaterial mit Hilfe eines Extruders hergestellt. Die Verstärkungsfasern können dem Extruder endlos oder geschnitten zudosiert werden. Durch die Scherwirkung der Schnecken erfolgt eine Einkürzung der Verstärkungsfasern. Gleichzeitig werden die Verstärkungsfasern in der Polymerschmelze fein verteilt und mit dem Matrixmaterial benetzt. Die Verstärkungsfasern haben im Granulatkorn keine gerichtete Orientierung. Die Faserlänge der Verstärkungsfasern ist bei diesen Kurzfasergranulaten in der Regel kleiner als die Granulatlänge und liegt normalerweise unter einem Millimeter.

Langfasergranulate werden in der kunststoffverarbeitenden Industrie in zunehmendem Maße zur Herstellung von leichten steifen Faserverbundbauteilen verwendet. Diese Langfasergranulate können prinzipiell auf verschiedene Art und Weise hergestellt werden. Eine seit langem etablierte Methode ist das Pultrusionsverfahren. Grundlage dieses Verfahrens ist der kontinuierliche Einzug von Verstärkungsfasersträngen (Rovings) in ein Werkzeug unter gleichzeitiger Zuführung von geschmolzenem Matrixmaterial. Im Idealfall durchdringt die Polymerschmelze die Rovings, und die Einzelfilamente werden mit einem Schmelzefilm umhüllt. Am Ausgang des Werkzeugs wird der Strang durch eine Düse geführt, wodurch ein definierter Querschnitt entsteht. Im Anschluß daran erfolgt die Abkühlung des Materixmaterials und die Ablängung des Materialstrangs. Die Faserlänge in einem so erzeugten Granulat entspricht durch die gestreckte Lage der Fasern der Granulatlänge.

Das Schmelze-Pultrusionsverfahren ist in einer Vielzahl von Varianten bekannt und wird sowohl zur Herstellung von Langfasergranulat als auch zur Fertigung.von Halbzeugen eingesetzt (JP-PS 08047924, JP-PS 06320536, US-PS 3,993,726, GB-PS 1,439,327, JP-PS 06315931). Weiterhin sind auch Pultrusionsverfahren zur Prepregverarbeitung bekannt. Bei diesen speziellen Pultrusionsverfahren kann die Zuführung von geschmolzenem Polymermaterial entfallen. Voraussetzung dafür ist die Verwendung von vorimprägnierten Verstärkungsfaserrovings (Prepregs).

Bekannt ist auch die Herstellung von Langfasergranulaten mit Hilfe des Extrusionsverfahrens (JP-PS 6-254 847 A). Dabei kann durch Verschlingungen und Versschlaufungen der Verstärkungsfasern die Länge einzelner Fasern auch größer als die Granulatlänge sein. Die Mehrzahl der Verstärkungsfasern ist aber durch die Scherwirkung der Extruderschnecken kürzer als die Granulatlänge.

Zur Herstellung von Langfasergranulat im Pultrusions- oder Extrusionsprozess sind aber in jedem Fall bestimmte Verstärkungsfaseraufmachungen (Rovings oder rieselfähige Langfasern) erforderlich. Das kann nicht mit allen Verstärkungsfasern realisiert werden.

Neben den seit langem bekannten Verfahren zur Langfasergianulatherstellung wurde noch ein weiteres Verfahren zur Herstellung von Langfaserpellets aus Faserbändern entwickelt (DE-PS 197 11 247).
Prinzip dieses Verfahrens ist die Bildung eines aufgeheizten, gedrehten Materialstranges aus einem Stapelfaserband, der dann abgekühlt und zu Pellets abgelängt werden kann. Die Drehung des Stranges wird nach diesem Verfahren mit zwei gleich schnell rotierenden Drehorganen realisiert. Nachteil dieses Verfahrens ist, daß die Drehung des Stranges nur zwischen den beiden Drehörganen konstant ist. Nach Durchlaufen des zweiten Drehorgans und Klemmung des Stranges im Granulator kann bei unzureichender Abkühlung und Fixierung des Materials ein Rückdrehen des Stranges auftreten. Dadurch wird die Festigkeit und Rieselfähigkeit des Granulats negativ beeinflußt.

Die WO 85/01691 betrifft eine Vorrichtung zur Herstellung verdrillter Kunststoffbänder. Das Kunststoffband wird dabei durch eine Erwännungszone gefuhrt, wobei es über dessen kritische Temperatur erwärmt, anschließend verdrillt und abgekühlt wird.

Die US 5 725 954 betrifft eine faserverstärkte thermoplastische Zusammensetzung mit einer Oberflächenstruktur. Die Fasern sind dabei in dem thermoplastischen Material eingebettet. Die Herstellung der Pellets die für Spritzgußverfahren geeignet sind werden ebenfalls offenbart. Zur Herstellung des faserverstärkten Verbundmaterials wird von Endlosfasern ausgegangen, die mittels Extruder mit geschmolzenem thermoplastischen Material zusammengebracht werden. Auch hier erfolgt ein vollständiges Aufschmelzen der Materialien miteinander.

Aufgabe der vorliegenden Erfindung ist die Schaffung eines Langfasergranulats, das eine gute Rieselfähigkeit hat, eine gleichmäßige Verteilung, der Verstärkungsfasern ermöglicht und bei gegebener Schnittlänge des Granulatkoms eine möglichst große Verstärküngsfaserlänge beinhaltet. Darüber hinaus soll ein Verfahren zur Herstellung von Langfasergranulat aus einer Stapelfasermischung aus Therinoplastfasern und Verstärkungsfasern geschaffen werden, bei dem der Energieaufwand verringert ist. Insbesondere soll bei dem Verfahren die Rückdrehung des Stranges nach Passieren der Kühlzone vermieden werden. Weitere Vorteile der Erfindung ergeben sich aus der folgenden Beschreibung.

Diese Aufgabe wird bei dem eingangs genannten Langfasergranulat erfindungsgemäß dadurch gelöst, daß die Verstärkungsfasern sich zusammen mit verschmolzenem Matrixmaterial in einer Mantelzone der Teilchen befinden und zusammen mit unverschmolzenen thermoplastischen Stapelfasern in einer Kernzone der Teilchen vorliegen. Der Hauptvorteil dieses Granulats besteht darin, daß Verstärkungsfasern mit einer größeren Faserlänge als der Granulatschnittlänge in das Granulatkorn eingebracht werden können. Überraschenderweise hat sich gezeigt, daß Verstärkungsfasern mit einer infolge der Torsion größeren Faserlänge als der Granulatkornschnittlänge auch dann in dem Korn untergebracht werden können, wenn der Strang bzw. das Granulatkorn nicht im Kernbereich durchgeschmolzen wird. Weiterhin hat sich gezeigt, daß trotz der nur teilweisen Aufschmelzung des Thermoplastanteils (in der Mantel- oder Randzone) keine Separation zwischen Verstärkungsfasern und Matrixmaterial erfolgt, d.h. im Mantel und im Kern bleibt die Beladung mit Verstärkungsfasern im wesentlichen gleich. Dadurch kann bei der späteren Verarbeitung des Granulats eine sehr gleichmäßige Verteilung der Verstärkungsfasern im Bauteil realisiert werden. Der Energieaufwand zur Herstellung der erfindungsgemäßen Langfasergranulate ist geringer als bei der Extrusions oder Pultrusion (Herstellung konventioneller Granulate), da das thermoplastische Polymermaterial nicht vollständig aufgeschmolzen werden muß, sonder nur der äußere Mantel des Strangs bzw. des Granulatkorns.

Vorzugsweise sind die Granulatteilchen Strangabschnitte und ist die Länge ihrer Verstärkungsfasern größer als die Länge der Strangabschnitte. Das Verhältnis der Längen der Verstärkungsfasern und der Strangabschnitte hängt von der Verdrillung des Strangs ab und steigt mit zunehmender Verdrillung. Der Durchmesser der Granulatteilchen liegt im allgemeinen in dem Bereich von 1 bis 10 mm. Der Anteil der Verstärkungsfasern im Granulatteilchen kann in dem Bereich von 10 bis 80 Gew.-% liegen. Die Anzahl der Windungen der Verstärkungsfasern in dem Granulatteilchen kann in einem weiten Bereich variieren und liegt im allgemeinen in dem Bereich von 0,1 bis 5.

Die Verstärkungsstapelfasern können Naturfasern, Synthesefaser oder Mineralfasern sein. Geeignete Fasern sind beispielsweise Flachs-, Hanf- und Jutefasern, sowie Glas- Aramid- und Kohlenstofffasern. Das Material der Matrix und der Thermoplastfasern kann insbesondere unter Polypropylen, Polyethylen und Polyamid ausgewählt werden.

Die Aufgabe wird ferner bei dem eingangs genannten Verfahren erfindungsgemäß dadurch gelöst, daß man den aus der Heizdüse kommenden Strang zunächst kühlt und dann dreht und abzieht und anschließend ohne Behinderung durch die Ablängung frei rotieren läßt. Anders als bei der in DE 197 11 247 beschriebenen Arbeitsweise erfolgt die Verdrillung des Strangs zusammen mit dem Abziehen nach erfolgter Kühlung, d.h. Konsolidierung. Die Verdrillung des Strangs erstreckt sich durch Kühlzone bis in die Heizdüse und wird durch die Reibung an der Düsenwand begrenzt. Durch die Bauart des Granulators wird sichergestellt, daß der Strang auch während des Abschneidvorgangs frei rotieren kann. Eine Rückdrehung des Strangs in dem Bereich zwischen Drehorgan und Granulator und damit auch eine Beeinträchtigung der Rieselfähigkeit und Festigkeit der Granulatteilchen werden vermieden.

Nach dem Verfahren schmilzt man in der Vorheizzone den thermoplastischen Faseranteil des Faserbandes nur in einem Mantelbereich auf. Dadurch wird nicht nur Wärmeenergie gespart, sondern das Verfahren wird auch beschleunigt, weil die Erwärmung und Rückkühlung weniger Zeit erfordern. Trotz der fehlenden Aufschmelzung des Kerns wird in diesem eine genügende Stabilisierung der Fasern in der verdrillten Form erreicht.

Zweckmäßigerweise arbeitet man mit einem Verhältnis von Drehzahl zu Abzugsgeschwindigkeit des Stranges in dem Bereich von 10 bis 150 Umdrehungen/Meter. Insbesondere liegt dieses Verhältnis zwischen 20 und 60 U/m.

Der Verstärkungsfaseranteil im Faserband liegt vorzugsweise in dem Bereich von 10 bis 80 Gew.-%, insbesondere zwischen 15 und 50 Gew.-%. Zweckmäßigerweise wählt man die mittlere Verstärkungsfaserlänge in dem Faserband in dem Bereich von 30 bis 200 mm aus. Die Feinheit des Faserbandes liegt im allgemeinen in dem Bereich von 5 bis 30 ktex. Vorzugsweise längt man den Strang zu Granulatteilchen einer Länge in dem Bereich von 1 bis 30 mm ab, insbesondere liegt diese Länge in dem Bereich von 10 bis 30 mm.

Die Aufgabe wird schließlich bei der eingangs definierten Vorrichtung erfindungsgemäß dadurch gelöst, daß das die Strangtorsion bewirkende Drehorgan hinter der Kühlzone angeordnet ist und auch als Abzugsorgan für den Strang ausgebildet ist und der Granulator während des Abtrennvorgangs kein Drehmoment oder höchstens ein Drehmoment ohne bleibende Rückdrehung auf den Strang ausübt. Der Granulator ist für ein im wesentlichen drehmomentfreies Abschneiden eingerichtet. Durch die Vermeidung der Rückdrehung ergibt sich ein Granulat, das sich trotz fehlender Durchschmelzung des Kerns durch Festigkeit und Rieselfähigkeit auszeichnet. Der Granulator kann so arbeiten, daß die den Strang erfassenden und schneidenden Elemente insgesamt etwa mit der gleichen Drehzahl wie das Drehorgan rotieren.

Erfindungsgemäß ist die Vorheizzone nur für die Aufschmelzung der Mantelzone des Stapelfaserbandes eingerichtet. In analoger Weise ist die Kühlzone nur zur Abkühlung und Konsolidierung der aufgeschmolzenen Mantelzone eingerichtet.

Die Erfindung wird nachfolgend an Hand der Zeichnung und der Ausführungsbeispiele näher beschrieben. Es zeigen
Figur 1 eine schematische Darstellung der Seitenansicht eines Granulatteilchens in Form eines zylindrischen Strangabschnitts, wobei die Verstärkungsfasern nur teilweise eingezeichnet sind;
Figur 2 den Querschnitt des in Figur 1 gezeigten Granulatteilchens, und
Figur 3 eine schematische Darstellung der erfindungsgemäßen Vorrichtung zur Herstellung des Langfasergranulats.

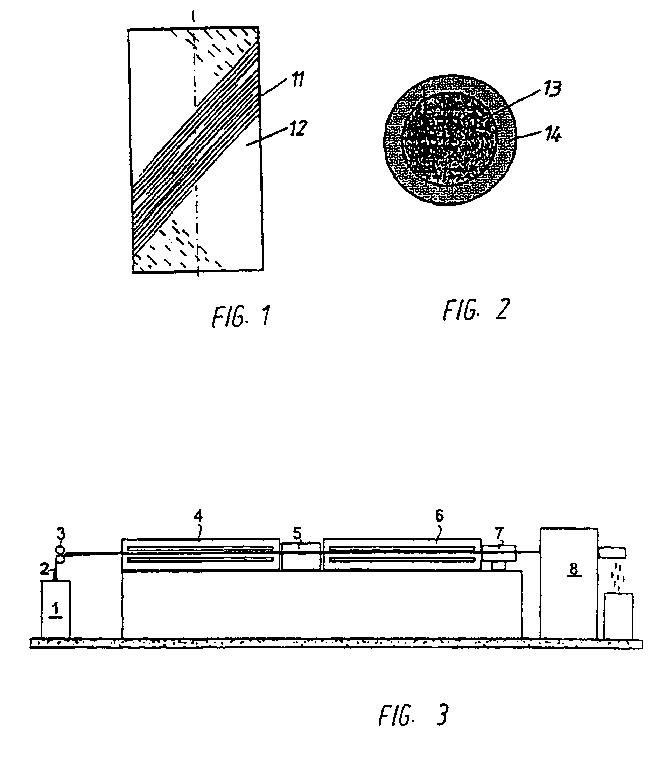

Aus Figur 1 ist ersichtlich, daß die Verstärkungsfasern 11 in einer schraubenförmigen Windung in dem Abschnitt angeordnet sind, wobei in der Mantelzone die Fasern 11 in dem aufgeschmolzenen Matrixmaterial 12 eingebettet sind. Die Figur 2 zeigt im Querschnitt den Kern 13 aus Verstärkungsfasern und thermoplastischen Matrixfasern und einen Mantel 14 aus Verstärkungsfasern 11 in einem verschmolzenen Matrixmaterial 12.

Nach Figur 3 umfaßt die Vorrichtung einen Vorratsbehälter 1, aus dem das Faserband 2 aus thermoplastischen Matrixfasern und Verstärkungsfasern über Abzugswalzen 3 einer Vorheizzone 4 zugeführt werden. In der Vorheizzone 4 werden die Matrixfasern innerhalb einer Mantelzone des Bandes aufgeschmolzen. Dabei ist weniger Energie als bei der vollständigen Durchschmelzung erforderlich, und die Stranggeschwindigkeit kann beschleunigt werden. Nach dem Verlassen der Vorheizzone 4 durchläuft der aufgeheizte Materialstrang eine beheizte Düse 5, die eine Kalibrierung des Strangquerschnitts bewirkt. Dann durchläuft der Strang eine Kühlzone 6, um das Matrixmaterial wieder abzukühlen und zu konsolidieren. Die Drehung des Stranges erfolgt am Ende der Kühlzone 6 durch ein kombiniertes Abzugs- und Drehorgan 7. Kernstück des kombinierten Abzugs- und Drehorgans 7 sind Walzen, die eine Rotation gegeneinander für den Abzug des zwischen ihnen befindlichen Strangs und eine Rotation um die Strangachse für die Verdrillung ausführen. Die Bauweise eines solchen kombinierten Drallgebers ist aus der Textilindustrie bekannt und in der Literatur beschrieben (W. Wegener, "Die Streckwerke der Spinnereimaschinen").

Die Drehung des Materialstrangs erstreckt sich von dem Drehorgan 7 durch die Kühlzone 6 bis in die Heizdüse 5 und wird durch die Reibung an der Düsenwand begrenzt. Der Strang wird mit Hilfe eines Grannulators 8 zu Granulatteilchen (Langfasergranular) abgelängt. Dabei ist durch die Bauart des Granulators sichergestellt, daß der Strang auch während des Abschneidvorgangs frei rotieren kann. Die erzeugten Granulatteilchen haben eine Kern-Mantel-Struktur (konsolidierter Mantel/Fasermaterial im Kern). Mit dieser Vorrichtung kann der Strang in einem kontinuierlichen Verfahren definiert tordiert werden.

### Ausführungsbeispiel 1

Ein Faserband aus Flachs- und Polypropylenfasern mit einer Bandfeinheit von 10 ktex, einer mittleren Faserlänge der Flachs- und Polypropylenfasern von 60 mm und einem Flachsfasergehalt von 30 Gew.-% wird über die Vorheizstrecke der in Figur 3 gezeigten Anlage auf eine Temperatur von 250°C erhitzt. Nach dem Verlassen der Vorheizstrecke durchläuft das Faserband eine auf 250°C geheizte Düse mit einem Durchmesser von 5 mm. Nach dem Verlassen der Düse durchläuft der Faserstrang eine nachgeschaltete Kühlstrecke und erhält am Ende der Kühlzone durch ein kombiniertes Abzugs- und Drehorgan einen Drall von 50 Drehungen/m. Schließlich wird der Materialstrang mit Hilfe eines Granulators zu Pellets mit einer Länge von 20 mm abgelängt.

### Ausführungsbeispiel 2

Ein Faserband aus Hanf- und Polypropylenfasern mit einer Bandfeinheit von 8 ktex, einer mittleren Faserlänge von 40 mm und einem Hanffasergehalt von 20 Gew.-% wird über eine Vorheizstrecke mittels Heißluft auf eine Temperatur von 230°C erhitzt. Nach dem Verlassen der Vorheizstrecke durchläuft das Faserband eine auf 230°C erhitzte Düse mit einem Durchmesser von 4 mm. Nach Verlassen der Düse durchläuft der Faserstrang eine Kühlstrecke zur Konsolidierung der aufgeschmolzenen Mantelzone und wird durch ein kombiniertes Abzugs- und Drehorgan mit 30 Drehungen/m gedreht. Danach wird der Strang mit Hilfe eines Granulators zu Pellets mit einer Länge von 10 mm abgelängt.

### Ausführungsbeispiel 3

Ein Langfasergranulat aus einem Fasergemisch von Glasverstärkungsfasern und Polyamid-Matrixfasern gemäß der Erfindung mit einem Glasfasergehalt von 40 Gew.-%, einem Granulatdurchmesser von 3 mm,einer Schnittlänge von 10 mm, einer Drehung von 50 U/m wird auf einer Spritzgießmaschine verarbeitet. Durch die homogene Verteilung der Verstärkungsfasern und die schraubenförmige Faseranordnung können große Verstärkungsfaserlängen problemlos aufdosiert und Bauteile mit gleichmäßiger Verstärkungsfaserverteilung in der Polyamidmasse hergestellt werden.

### Ausführungsbeispiel 4

Ein Langfasergranulat aus einem Fasergemisch von Flachs-Verstärkungsfasern und Polypropylen-Matrixfasern mit einem Flachsfasergehalt von 30 Gew.-%, einem Granulatdurchmesser von 6 mm, einer Schnittlänge von 25 mm, einer Drehung von 40 U/m wird auf einem Schneckenplastifikator aufgeschmolzen. Anschließend wird mit dem Plastifikator ein Materialstrang in einer Presse abgelegt und zu einem großflächigen Bauteil verpreßt. Durch die schraubenförmige Faseranordnung kann eine große Verstärkungsfaserlänge problemlos aufdosiert werden. Außerdem kann durch die gleichmäßige Verteilung der Verstärkungsfasern ein gleichmäßiger Fasergehalt im gesamten Preßteil erzielt werden.

## Patentansprüche

1. Verfahren zur Herstellung von Langfasergranulat aus einer Stapelfasermischung aus thermoplastischen Fasern und Verstärkungsfasern, bei dem man ein Faserband aus der Stapelfasermischung durch eine Vorheizzone führt, dann durch eine Heizdüse zu einem Strang zieht und den Strang nach Drehung und Konsolidierung durch Kühlung zu dem Langfasergranulat ablängt, **dadurch gekennzeichnet, daß** man in der Vorheizzone den thermoplastischen Faseranteil des Faserbandes nur in einem Mantelbereich aufschmilzt, dann den Strang zunächst kühlt und dann dreht und abzieht und anschließend ohne Behinderung durch die Ablängung frei rotieren lässt.

2. Verfahren nach Anspruch 1, **dadurch gekennzeichnet, daß** man mit einem Verhältnis von Drehzahl zu Abzugsgeschwindigkeit in dem Bereich von 10 bis 150 U/m arbeitet.

3. Verfahren nach einem der Anspruch 1 oder 2, **dadurch gekennzeichnet, daß** man mit einem Verstärkungsfaseranteil im Faserband in dem Bereich von 10 bis 80 Gew. -% arbeitet.

4. Verfahren nach einem der Ansprüche 1 bis 3, **dadurch gekennzeichnet, daß** man die mittlere Verstärkungsfaserlänge in dem Faserband in dem Bereich von 30 bis 200 mm auswählt.

5. Verfahren nach einem der Ansprüche 1 bis 4, **dadurch gekennzeichnet, daß** man die Feinheit des Faserbandes in dem Bereich von 5 bis 30 ktex auswählt.

6. Langfasergranulat aus Granulatteilchen, bei denen in einer thermoplastischen Matrix Verstärkungsstapelfasern schraubenförmig angeordnet sind, **dadurch gekennzeichnet, daß** die Verstärkungsstapelfasern sich zusammen mit verschmolzenem Matrixmaterial (12) in einer Mantelzone (14) der Teilchen (15) befinden und zusammen mit unverschmolzenen thermoplastischen Stapelfasern in einer Kernzone (13) vorliegen.

7. Langfasergranulat nach Anspruch 6, **dadurch gekennzeichnet, daß** die Teilchen Strangabschnitte (15) sind und die Länge ihrer Verstärkungsfasern (11) größer als die Länge der Strangabschnitte ist.

8. Langfasergranulat nach Anspruch 6 oder 7, **dadurch gekennzeichnet, daß** die Verstärkungsstapelfasern Naturfasern, Synthesefasern oder Mineralfasern sind.

9. Langfasergranulat nach einem der Ansprüche 6 bis 8, **dadurch gekennzeichnet, daß** der Durchmesser der Granulatteilchen (15) in dem Bereich von 1 bis 10 mm liegt.

10. Langfasergranulat nach einem der Ansprüche 6 bis 9, **dadurch gekennzeichnet, daß** der Anteil der Verstärkungsfasern (11) im Granulatteilchen (15) in dem Bereich von 10 bis 80 Gew.-% liegt.

11. Langfasergranulat nach einem der Ansprüche 6 bis 10, **dadurch gekennzeichnet, daß** das Material der Matrix und der Thermoplastfaser bevorzugt Polypropylen, Polyethylen oder Polyamid ist.

12. Vorrichtung zur Herstellung von Langfasergranulat aus einem Stapelfasergranulat aus thermoplastischen Fasern und Verstärkungsfasern, mit Vorheizzone (4), Heizdüse (5) und Kühlzone (6) und einem Granulator (8) die **dadurch gekennzeichnet ist, daß** das die Strangtorsion bewirkende einzige Drehorgan (7) hinter der Kühlzone (6) angeordnet und als Abzugsorgan für den Strang ausgebildet ist und der Granulator (8) während des Abschneidevorgangs kein Drehmoment oder höchstens ein Drehmoment ohne bleibende Rückdrehung auf den Strang ausübt und in der Vorheizzone (4) nur die Aufschmelzung einer Mantelzone (14) des Stapelfaserbandes möglich ist, der Granulator (8) für ein im wesentlichen drehmomentfreies Abschneiden eingerichtet ist und die Kühlzone (6) nur zur Abkühlung und Konsolidierung der aufgeschmolzenen Mantetzone (14) ausgebildet ist.

## Claims

1. Procedure for manufacturing continuous fiber granulate out of a staple fiber mixture of thermoplastic fibers and reinforcing fibers, in which a fiber strip comprised of the staple fiber mixture is guided through a preheating zone, then extruded through a heating nozzle into a strand, and the strand is cut into continuous fiber granulate sections after rotation and consolidation via cooling, **characterized by** the fact that the thermoplastic fiber portion of the fiber strip is only melted in a sheath area in the preheating zone than the strand is cooled, and then rotated, withdrawn and subsequently allowed to rotate freely as it is cut into sections with no impediment.

2. Procedure according to claim 1 **characterized by** the fact that a ratio of speed to withdrawal rate ranging from 10 to 150 revolutions per meter is used.

3. Procedure according to claim 1 or 2, **characterized by** the fact that the percentage of reinforcing fibers in the fiber strip ranges from 10 to 80 %w/w.

4. Procedure according to claim 1 to 3, **characterized by** the fact that an average reinforcing fiber length in the fiber strip ranging from 30 to 200 mm is selected.

5. Procedure according to one of claims 1 to 4, **characterized by** the fact that a fineness of the fiber strip ranging from 5 to 30 ktex is selected.

6. Continuous fiber granulate consisting of granulate particles, in which reinforcing staple fibers are helically arranged in a thermoplastic matrix, **characterized by** the fact that the reinforcing staple fibers are located in a sheathed zone (14) of the particles (15) along with the melted matrix material (12), and in a core zone (13) of the particles along with unmelted thermoplastic staple fibers.

7. Continuous fiber granulate according to claim 6, **characterized by** the fact that the particles are strand sections (15), and the length of their reinforcing fibers (11) is greater than the length of the strand sections.

8. Continuous fiber granulate according to claim 6 or 7, **characterized by** the fact that the reinforcing staple fibers are natural fibers, synthetic fibers or mineral fibers.

9. Continuous fiber granulate according to one of claims 6 to 8, **characterized by** the fact that the diameter of the granulate particles (15) ranges from 1 to 10 mm.

10. Continuous fiber granulate according to one of claims 6 to 9, **characterized by** the fact that the percentage of reinforcing fibers (11) in the granulate particle (15) ranges from 10 to 80 %w/w.

11. Continuous fiber granulate according to one of claims 6 to 10, **characterized by** the fact that the material of the matrix and thermoplastic fibers preferably consists of polypropylene, polyethylene or polyamide.

12. Device for manufacturing continuous fiber granulate out of a staple fiber strip consisting of thermoplastic fibers and reinforcing fibers, with a preheating zone (4), a heating nozzle (5), a cooling zone (6) and a granulator (8), **characterized by** the fact that the rotating element (7) that generates the strand torsion is arranged behind the cooling zone (6) and designed as a withdrawal element for the strand, and that the granulator (8) exerts no torque, or at most a torque without permanent reverse rotation, on the strand during the separation process, and that the preheating zone (4) is set up only for melting a sheath zone (14) of the staple fiber strip, the granulator (8) is set up to execute essentially torque-free cutting operations an the cooling zone (6) is designed only for cooling and consolidating of the melted sheath zone (14).

## Revendications

1. Procédé de fabrication de granulé à fibres longues à partir d'un mélange de fibres discontinues en fibres thermoplastiques et en fibres de renforcement, dans lequel on guide à travers une zone de préchauffe, puis on tire ensuite à travers une buse de chauffe pour former un cordon une bande de fibres en mélange de fibres discontinues et on tronçonne le cordon, après tournage et consolidation par refroidissement, pour former le granulé à fibres longues, **caractérisé en ce qu'**on ne fond la proportion de fibres thermoplastiques de la bande de fibres dans la zone de préchauffe que dans une zone de l'enveloppe, qu'on refroidit d'abord, puis qu'on tourne et qu'on tire et qu'ensuite on laisse tourner.librement le cordon sans entraves grâce au tronçonnage.

2. Procédé selon la revendication 1, **caractérisé en ce qu'**on travaille avec un rapport du régime de rotation à la vitesse d'extraction se situant dans la plage de 10 à 150 r/m.

3. Procédé selon l'une quelconque des revendications 1 ou 2, **caractérisé en ce qu'**on travaille avec une proportion de fibres de renforcement dans la bande de fibres se situant dans la plage de 10 à 80 % en poids.

4. Procédé selon l'une quelconque des revendications 1 à 3, **caractérisé en ce qu'**on choisit la longueur des fibres de renforcement dans la bande de fibres dans la plage de 30 à 200 mm.

5. Procédé selon l'une quelconque des revendications 1 à 4, **caractérisé en ce qu'**on choisit la finesse de la bande de fibres dans la plage de 5 à 30 ktex.

6. Granulé à fibres longues en particules de granulé dans lesquelles sont disposées en hélice, dans une matrice thermoplastique, des fibres discontinues de renforcement, **caractérisé en ce que** les fibres discontinues de renforcement se trouvent avec la matière de matrice fondue (12) dans une zone d'enveloppe (14) des particules (15) et sont présentes avec des fibres discontinues thermoplastiques non fondues dans une zone de noyau (13).

7. Granulé de fibres longues selon la revendication 6, **caractérisé en ce que** les particules sont des sections de cordon (15) et que la longueur de leurs fibres de renforcement (11) est supérieure à la longueur des sections de cordon.

8. Granulé de fibres longues selon la revendication 6 ou 7, **caractérisé en ce que** les fibres discontinues de renforcement sont des fibres naturelles, des fibres de synthèse ou des fibres minérales.

9. Granulé de fibres longues selon l'une quelconque des revendications 6 à 8, **caractérisé en ce que** le diamètre des particules de granulé (15) se situe dans la plage de 1 à 10 mm.

10. Granulé de fibres longues selon l'une quelconque des revendications 6 à 9, **caractérisé en ce que** la proportion de fibres de renforcement (11) dans les particules de granulé (15) se situe dans la plage de 10 à 80 % en poids.

11. Granulé de fibres longues selon l'une quelconque des revendications 6 à 10, **caractérisé en ce que** le matériau de la matrice et de la fibre thermoplastique est de préférence du polypropylène, du polyéthylène ou du polyamide.

12. Dispositif de fabrication de granulé à fibres longues à partir d'un granulé de fibres discontinues en fibres thermoplastiques et en fibres de renforcement, comportant une zone de préchauffe (4), une buse de chauffe (5) et une zone de refroidissement (6) et un granulateur (8), qui est **caractérisé en ce que** l'unique organe de rotation (7) entraînant la torsion du cordon est disposé derrière la zone de refroidissement (6) et est conçu sous forme d'organe d'extraction pour le cordon et que le granulateur (8) n'exerce pendant l'opération de découpe aucun couple de rotation ou au maximum un couple de rotation sans rotation en retour restante sur le cordon et que, dans la zone de préchauffe (4), seule la fusion d'une zone d'enveloppe (14) de la bande de fibres discontinues est possible, que le granulateur (8) est aménagé pour une découpe sensiblement sans couple de rotation et que la zone de refroidissement (6) n'est conçue que pour refroidir et consolider la zone d'enveloppe fondue (14).
